# EUROPEAN PATENT APPLICATION

(11) **EP 1 834 902 A1**
(43) Date of publication of application: **19.09.2007**
(21) Application number: 07103957.2
(22) Date of filing: 12.03.2007
(51) Int. Cl.: B65F 1/14, B60B 37/10

(54) **Axle for assembling wheels of a plastic container for municipal waste**

(30) Priority: 16.03.2006 CZ 200617535 U
(71) Applicant: Novex Kladno spol. s.r.o., 272 01 Kladno (CZ)
(72) Inventor: CERNÍK, Jan, 27202, Kladno (CZ)
(74) Representative: Kratochvil, Vaclav

(57) **Abstract**

The shaft is hollow and has plastics endings. The shaft is formed by a tube (1) which has on its ends shaped plastics endings (2) which ensures the fixation of the wheels.

## Description

Axle-shaft designed for carriage wheels applied to the plastic containers for municipal waste.

The invention pertains to the problematics of the axle-shaft used with the carriage wheels of the plastic waste containers assigned for the communal and assorted waste.

For stowing away of the communal or assorted waste respectively, since many years, the containers made either of steel sheet or of plastic are assigned. First of all, the plastic and metallic containers of various volume, most frequently in volume of 60, 80, 120 and 240 Its. are concerned. The containers produced of steel sheet do have most frequently the circular opening section and their complete imperfection is especially resulting from the fact that they are mostly not equipped with the rolling wheels, which makes their manipulation more difficult.

Containers produced of plastic are used much more frequently and they usually have square or oblong shape, and in their bottom - because of easy manipulation - they are equipped with the wheels set on the axle. The usual execution of the movable containers is based on the wheels with plastic discs and rubber tire. The axle is produced of the solid round steel in diameter of 21, 5 mms. The obvious disadvantage of this concept is not only the relatively high axle weight mass - on an average amounting to 1.400 grams per piece - but also the necessary very high production labor intensity and also - without any doubt - the thereof resulting extremely high price per one kilogram of the used raw material, i.e. round steel in this particular case.

The only positive aspect of the presently existing concept is just the high mechanical resistance of the axle, which is however in view of the real operational load evidently over-dimensional.

The above mentioned imperfections especially great weight of the steel axle-shaft for carriage wheels applied to the plastic containers for waste are removed by described design. The essentiality of the described technical concept is the hollow shaft with the plastic end parts. In principle it is replacement of the full circular drawn steel, usually of the diameter 21,5 mm, in exchange for the accurate steel tube of the same diameter 21,5 mm with the wall thickness of 2 mm, which has on the end parts the plastic endings which ensures the fixation of the carriage wheels in the same way as in the existing type.

The advantage of the hollow shaft with the plastic endings is according with this technical solution much lower weight of the shaft - less then third of the original, practically only 430 g. In view of the reduction of the basic raw material consumption - i.e. of the round - steel - also the resulting price of the innovated shaft is reduced quite dramatically. The shaft is made from readily available drawn steel tube which has adequate mechanical qualities. The very joint between the shaft and the wheel is in this case made more by the two plastics, therefore both parts are wearing evenly. Inconsiderable feature is also that due to contact of two plastics parts there is certain noise elimination when wheels are rotated.

Plastics endings parts are composed of HDPE (High Density Poly Ethylen) substance with UV stabilizer, which is affordable, easy to process, hygienically unexceptionable, offer resistance for mechanical damages and is easily recyclable. When is equipped with UV stabilizer, provide using the container even in exterior without special protection against the weather conditions.

Tube has advantageously the layer of the burned varnish in thickness of 10 - 35 µm. Connection between the tube and ending parts may be mad of different ways, e.g. with screw connection, moulded connection, glued connection etc.. Ending parts are advantageously made of HDPE. Further features are lower expenses and lower work difficulty at treatment of mounting for wheels.

This technical solution is especially effective in term of price and weight of the shaft. The main and crucial feature is possibility for transportation of more then triple amount of the hollow shafts compared to existing all-steel shafts, thus much on savings during manipulation and in the achievable frequency of the deliveries. In consideration of the numerous incoming enquiries covering oftentimes the range of millions of pieces of the shafts in question, and this is to speak just about the European consumers, we can take into consideration even the savings in connection with the squeezing down the burden on the transport communications, not speaking certainly about the other consequences.

The shaft, designed herewith especially for the application to the construction of the plastic waste containers carriage wheels as per the innovated technical dispositions will be described in details on basis of the concrete execution example as reflected in the attached picture demonstrating the respective shaft in the front view.

The considered shaft of the outer diameter amounting to 21,5 mms, designed for the carriage wheels for the movable plastic waste containers, is made of tube 1 21,5 x 2 mm, at the ends of this tube are fixed shaped plastics endings 2 which ensures the fixation of the rolling wheels.

The tube 1 is galvanized against the corrosion with layer thickness of 15-25 µm. At consumer request it is possible to do the protection ecologically by cataphoresis. The plastics endings 2 are forced into the tube 1 and are shaped so they can not be pulled out. The HDPE is made of EXXONMOBIL HMA 014 material with the UV stabilizer. Tensile strength limit of this hollow shaft with the plastics endings 2 according to this technical solution is 400 up to 450 MPa, which is strength slightly lesser then that of the solid shaft, but this handicap is fully balanced by considerably lower weight and lower price, compared to existing full steel shaft, and maintaining the same functionality.

The hollow shaft with the plastics endings designed as per these described technical dispositions find immediate utilization especially in use with low-capacity plastic waste containers, both for communal and assorted waste. The allover the world waste quantity is increasing quite continuously and it is no doubt that the industrial region acting on this field will also be growing steadily, really in a massive way. The hollow shaft with plastics endings ranks with the unforgettable components of the containers with so called value added properties

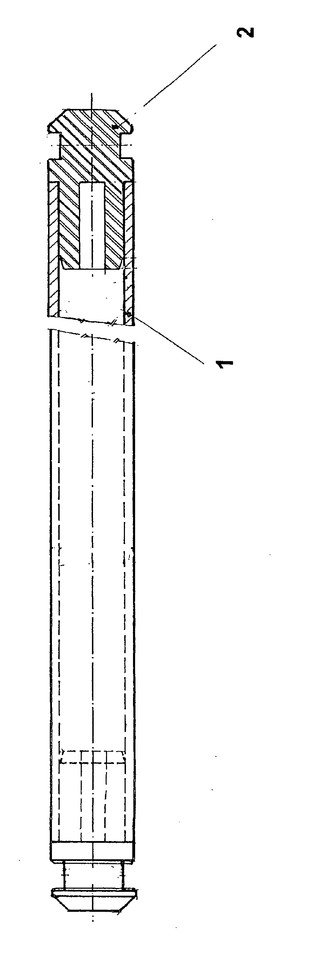

## Claims

1. The hollow shaft with plastics endings for the carriage wheels of the movable plastic waste containers, **characterized by** the fact that it is formed by tube (1) which has on its ends shaped plastics endings 2 which ensures the fixation of the rolling wheels.

2. The shaft according to claim 1, **characterized by** the fact that the tube (1) is covered by layer of the burned finish of 10 up to 35 µm - by cataphoresis.

3. The shaft according to claim 1 or 2, **characterized by** the fact that connection between the tube (1) and endings (2) is made of at least one of these connections: thread, crimp, glue joint.

4. The shaft according to any of the above-mentioned claims, **characterized by** the fact that endings (2) are made of HDPE plastic.
